# EUROPEAN PATENT APPLICATION

(11) **EP 1 701 534 A1**
(43) Date of publication of application: **13.09.2006**
(21) Application number: 05405236.0
(22) Date of filing: 10.03.2005
(51) Int. Cl.: H04N 1/047

(54) **Method for calibrating a printer**

(71) Applicant: Elca Informatique S.A., 1007 Lausanne (CH)
(72) Inventor: Gorostidi, Daniel, 1024 Ecublens (CH); Caraccia, Muriel, 1012 Lausanne (CH); Madon, Dominik, 1205 Geneva (CH)
(74) Representative: Reuteler, Raymond Werner

(57) **Abstract**

Method and means for calibrating a printer, including providing a moiré base pattern (2) and a complementary moiré revelator pattern (6), one as a printing file for printing by said printer and the other on a transparency. Either the revelator or the base pattern has a varying frequency and a corresponding scale (18a, 18b) allowing the calibration value to be determined by reading moire patterns (12a, 12b) formed when the base pattern and complementary revelator pattern are superposed.

## Description

The present invention relates to a method of calibrating a printer, in particular for correct adjustment of the dimensions of the printed image.

Various printing parameters require calibration, such as the registration of pixels from overlaying colors, intensity of different colors, and positioning and spacing of pixels.

In non-professional printing systems, in particular printers for the home and office use, calibration is usually limited to registration of colors in color-printers to ensure that color planes are overlaid precisely on top of each other. Calibration methods often require the user to enter the values that he considers most appropriate from a test page printed during the printer setup or when print cartridges are changed.

Home and office printers are however generally not calibrated for precise size reproduction of the printed image and may thus slightly magnify or reduce the height and/or width of the image. For most applications, these distortions are imperceptible to the eye and of no importance. There is however a growing need to ensure accurate reproduction of the dimensions of a printed image in certain applications, for example for images with embedded features based on moiré patterns, visual encryption, and watermarks. Moiré patterns, visual encryption or watermarking can be used to embed hidden or encoded information in printed matter, which particularly useful as a security feature to protect against forgery or illicit reproduction of the printed matter. Revealing the embedded security features of the aforementioned types may, for instance, be performed by overlaying a complementary revelator or decoding transparency on the printed image. Alternatively, digital scanning and decoding techniques of the printed image may be performed.

In order to be able to correctly and reliably reveal the embedded information in Moiré patterns, visual cryptography or watermarks, the printed pixels must be dimensionally accurately positioned with respect to each other. In the absence of calibration, the margin of error in printers, particularly those for home and office use, is however too large for printing moiré patterns, visual encrypted images or watermarks with sufficient accuracy to enable the reliable revelation of the embedded information.

There is a great demand for providing tickets for transportation or entertainment events, value-bearing coupons, certificates, receipts for various transactions, and the like, that may for example be ordered through the internet and printed by the end user with a low cost home or office printer.

In view of the foregoing, it is an object of this invention to provide an accurate and reliable method, and a means therefore, of calibrating printers for dimensional accuracy of the printed image.

It is advantageous to provide a method, and a means therefore, of calibrating printers for dimensional accuracy of the printed image that is simple to perform by users of non-professional printers (home and office) as well as users of professional printing systems.

It is further advantageous to provide a printer calibration method and means therefore that is economical.

Objects of this invention have been achieved by providing the method of calibrating a printer for dimensional accuracy of the printed image according to claim 1.

Objects of this invention have also been achieved by providing means for calibrating a printer for dimensional accuracy of the printed image according to claim 10.

Disclosed herein is a method and means of calibrating a printer including providing a moiré base pattern and a complementary moiré revelator pattern, one as a printing file for printing by said printer and the other reproduced on a transparency, wherein either the revelator or the base pattern has a varying frequency and a corresponding scale allowing the calibration value to be determined by reading moiré patterns formed when the base pattern and complementary revelator pattern are superposed.

In an embodiment, the revelator has markings arranged in successive segments where the frequency varies progressively from one segment to the next. Alternatively, the revelator may have markings arranged successively where the frequency varies progressively from one marking to the next. The markings may for example be in the form of juxtaposed dark or opaque bands separated by slits. The frequency is varied for example by varying the thickness of the bands and thus the distance between slits.

Preferably, the base pattern has markings arranged in a juxtaposed manner at a constant frequency. In its simplest form, the markings of the base pattern may be identical to each other, although it would be possible to have different shape markings. The base pattern may however have markings at a varying frequency, for example a varying distance between markings.

Preferably, the base pattern is provided as a printing file and the revelator pattern is provided on the transparency.

In practice, calibration of a printer may be performed by printing the base pattern (or revelator pattern) during installation of the printer or during a calibration operation on an installed printer. Subsequently, the user superposes the transparency on the print so that the revelator and base patterns overlie. The moiré patterns revealed by the superposition indicate the position along the revelator pattern where the frequency coincides with the base pattern, and thus enables the degree of reduction or magnification of the print, compared to the specified exact value, to be determined on a corresponding scale provided on the revelator. The value may be entered in the printer or a data processing system connected to the printer for correction of the print size parameter.

Other objects and advantageous features of the invention will be apparent from the claims, the description and the accompanying figures in which:
Fig. 1 is a representation of a moiré base pattern according to an embodiment of this invention;
Fig. 2 is a representation of a complementary moiré revelator pattern according to an embodiment of this invention;
Fig. 3 is a representation of a moiré pattern resulting from the superposition of the moiré base pattern according to Fig. 1 and the complementary moiré revelator pattern according to Fig. 2;
Fig. 4 is a representation of a moiré base pattern according to another embodiment of this invention;
Fig. 5 is a representation of a complementary moiré revelator pattern according to another embodiment of this invention; and
Fig. 6, 7 and 8 are representations of a moiré pattern resulting from the superposition of the moiré base pattern according to Fig. 4 and the complementary moiré revelator pattern according to Fig. 5.

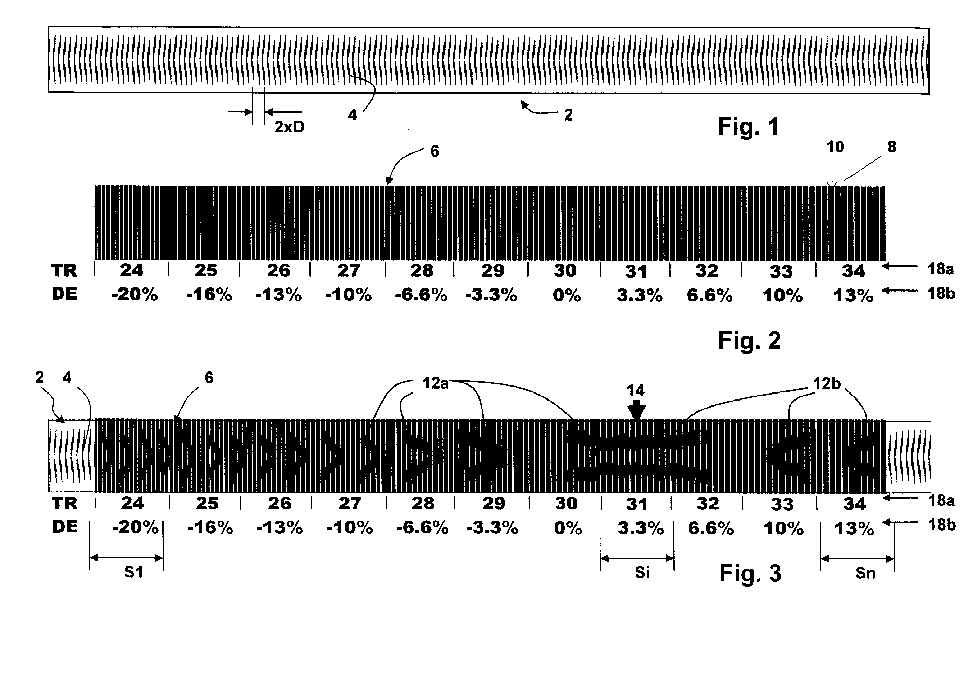

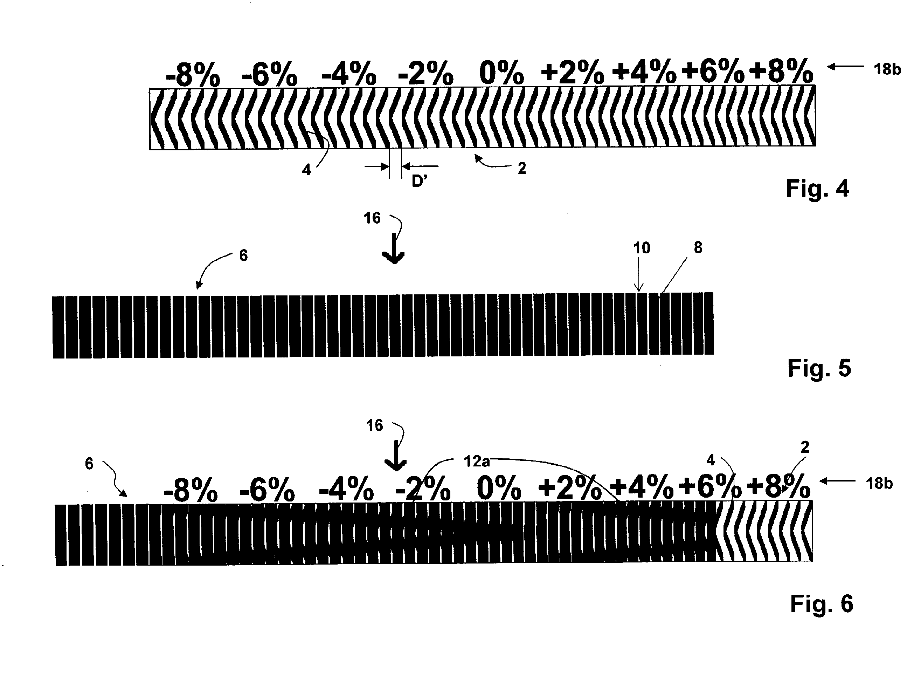

Referring to the figures, Figs 1 and 4, a moiré base pattern 2 comprising a plurality of markings 4 arranged in a juxtaposed manner is shown. The markings are at a regular spacing D (constant frequency) in the embodiment of Fig. 1, and at a gradually varying spacing D' (varying frequency) in the embodiment of Fig. 4. The shape of the markings 4 may be essentially identical to each other.

When the moiré base pattern is printed by a printer before calibration, the distance between the markings will be a function of the printer accuracy and settings. Prior to calibration, a printer may slightly magnify the printed image, thus increasing the spacing *D*+δ between the markings 4, or slightly reduce the image size, thus reducing the spacing *D*-δ between the markings 4.

Referring to Figs 2 and 5, the moiré pattern revelator in this embodiment comprises a series of juxtaposed markings in the form of dark or opaque bands 10 separated by spacings in the form of thin slits 8.

The thickness of the bands, or said otherwise, the distance between slits, is constant over a segment S, but varies from one segment to the next in the embodiment of Fig. 2. In the example shown in figure 2, the distance between slits in the segments from left to right (S1 to Sn) increases from a value D-Δ slightly less than the specified distance D between the markings 4 of the moiré pattern base 2, to a value D+Δ slightly greater than D. The difference Δ in spacing of the slits around the specified value D is chosen so as to be slightly greater than the maximum expected spacing error δ (in magnification or reduction) for the printers to be calibrated. In other words, the frequency of the slits is variable in segments across the length of the revelator around a median value corresponding to the specified frequency of the moiré base pattern markings.

It is also possible to vary the distance between slits 8 not in segments but from one to the next adjacent slit, in other words on a continuous scale over the length of the revelator pattern as in the embodiment of Fig. 5.

In the embodiments shown, the slits 8 and bands 10 are drawn as straight lines,and the markings 4 are drawn as flattened arrow heads. When the base and revelator are superposed, a moiré pattern 12a, 12b, 12 emerges because of the interference of the base pattern markings 4 with the slits of the revelator. The moiré pattern reveals shapes 12a, 12b that are an amplification of the underlying shapes of the markings 4, in this case arrow heads.

Referring to Fig. 3, which represents a superposition of the base and revelator patterns of Figs 1 and 2, in the region where the spacing between slits is less than the spacing between the markings 4 (as shown on the left side of figure 3), the arrow heads 12a that emerge are amplified but inverted with respect to the base shape of the markings. The degree of amplification increases as the difference in spacing (i.e. frequency) between the slits and the markings decreases. When the spacing (frequency) of the slits corresponds to that of the markings 4, then amplification becomes "infinite" and the underlying arrow shape merges into lines, as shown in Segment Si of figure 3. Moving to the right of segment Si in figure 3, where the spacing between slits 8 is greater than the distance between the markings 4, the arrow heads 12b change direction and their amplification decreases as the difference in frequency increases.

The segment Si, or position 14 in the case of a continuous scale, where the moiré pattern 12a, 12b changes direction thus corresponds to the segment or position where the frequency of the base pattern and revelator pattern coincide. A scale 18a, 18b provided on the revelator indicates the spacing between slits, for example in terms of pixels (scale 18a) and/or in terms of percentage reduction or magnification of the image, about the specified value (scale 18b). In the example illustrated in figure 3, the specified value D corresponds to the distance between slits in the segment with the scale reading of 30 pixels or 0% distortion. The moiré pattern crosses over at position 14 which is in the segment with the scale reading of 31 pixels or 3.3% magnification. In other words, the printer magnifies the image 3.3% with respect to the exact (specified) dimensions. The printer can thus be corrected by entry, in a data processing system connected to the printer or in the printer, of the scale reading at the crossover point or segment.

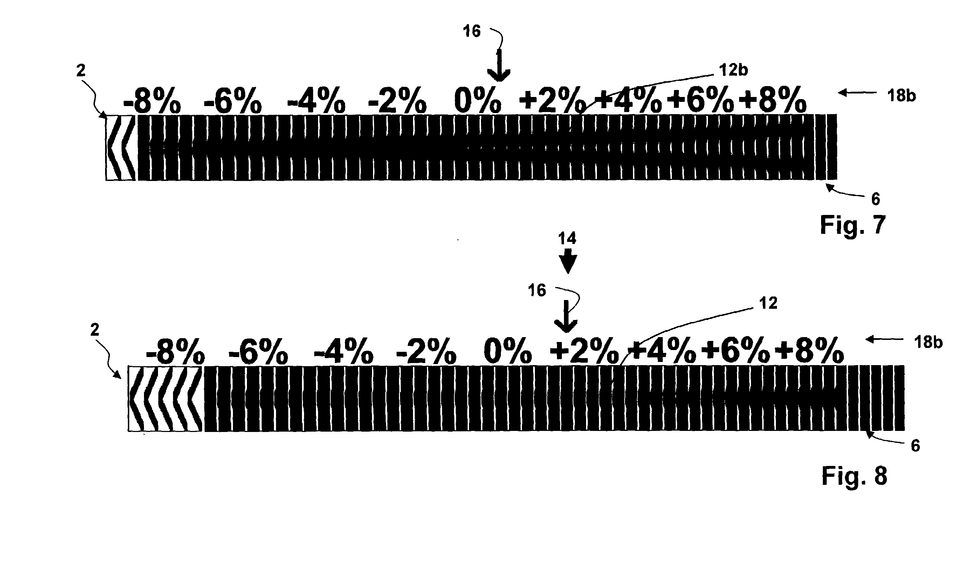

Referring to Figs 6 to 8, which represent a superposition of the base and revelator patterns of Fig. 4 and 5, which both have a variable frequency, the direction of the amplified arrow heads 12a, 12b that emerge will depend on the relative position of the superposed revelator and base patterns 6, 2, respectively. In the examples of Figs. 6 to 8, the printer magnifies the image around 2% with respect to the exact or specified dimensions. If the revelator 6 is positioned to the left of the scale, as shown in Fig. 6, the arrow heads 12a are magnified but inverted with respect to the base markings 4. If the revelator pattern is however on the right hand side of the scale, as shown in Fig. 7, the arrow head 12b is amplified, but in the same direction as the markings 4. When the revelator and base patterns are positioned such that the indicator 16 marks the position in which the frequencies of the revelator and base patterns coincide, the pattern that is revealed forms a band 12 that is continuous (in other words, corresponds to infinite amplification). Thus, in order to determine the printer magnification or reduction, the user slides the base and revelator patterns relative to each other until a continuous band emerges, as seen in Fig. 8, and reads the amount of magnification or reduction on the scale 18b at the position of the pointer 16. The pointer 16 is provided with the pattern that does not comprise the scale, for example if the pointer 16 is provided with the revelator pattern 6, the scale 18b will be printed with the base pattern 2.

In practice, a printer may be supplied with a transparency on which the moiré revelator pattern 6 is printed (by a professional calibrated industrial printer for example), as well as a printing file of the moiré base pattern, for example in a memory of the printer or on separate data carrier. During installation of a printer, or when calibrating an installed printer, the user executes a print of the moiré base pattern and subsequently places the transparency on the print so that the moiré revelator pattern overlies the moiré base pattern. The user then determines the point or segment where the moiré pattern crosses over and enters the corresponding scale reading via an interface of the printer or of a data processing system connected to the printer. The printer magnification or reduction can thus be corrected by appropriate software and hardware.

Calibration of the printer can be performed for size correction along one dimension (e.g. horizontal or vertical) or two dimensions (e.g. horizontal and vertical). As is illustrated in the figures, the base pattern and revelator patterns may have a general outer contour essentially in the shape of an elongated linear band. For calibration of the print size in two dimensions, two moiré base patterns can be printed, for example a first moiré base pattern printed horizontally across the page and a second moiré base pattern printed vertically (i.e. orthogonally to the first moiré pattern). The two patterns could also be grouped together in the form of a cross (orthogonally arranged bands). More complex base patterns and corresponding revelator pattern could however be used for calibration in two dimensions. For example, the moiré base and revelator patterns could be in the general form of concentric circles (or segments of circles) of markings, spaced radially at a variable distance for the revelator, and at constant distance for the base.

In a preferred embodiment, the variable frequency revelator pattern with scale is provided on a transparency whereas the constant frequency base pattern is intended to be printed. It is however also possible to print the variable frequency pattern and provide the constant frequency pattern on a transparency, since the two are complementary. The latter embodiment may be less advantageous than the preferred embodiment considering that the constant frequency pattern will be simpler and more reliable to print than the variable frequency pattern.

While the figures illustrate the moiré pattern as an arrowhead, the shape of the moiré pattern is not *per se* of particular importance since it is the variation of the moiré patterns as a function of the difference in the frequencies of the base and revelator markings that allow the calibration value to be determined. Thus, the markings 4, 10 (and corresponding spaces therebetween) of the base and revelator patterns can be provided with many different and more complex shapes than those illustrated, without departing from the scope of this invention, as will be understood by the person skilled in the art.

## Claims

1. Method of calibrating a printer including providing a moire base pattern (2) and a complementary moiré revelator pattern (6), one as a printing file for printing by said printer and the other on a transparency, wherein either the revelator or the base pattern has a varying frequency and a corresponding scale (18a, 18b) allowing the calibration value to be determined by reading moiré patterns (12a, 12b, 12) formed when the base pattern and complementary revelator pattern are superposed.

2. Method according to claim 1 comprising the steps of:
- printing either of said base pattern or revelator pattern;
- superposing the transparency on the print so that the revelator and base patterns overlie;
- reading the moiré patterns revealed by the superposition and determining on the corresponding scale the value of reduction or magnification;
- entering said value in the printer or in a data processing system connected to the printer for correction of the print size parameter.

3. Method according to claim 1 or 2 wherein the base pattern has markings (4) arranged at a constant frequency.

4. Method according to claim 1,2 or 3 wherein the revelator has markings arranged in successive segments where the frequency varies progressively from one segment to the next.

5. Method according to claim 1, 2 or 3 wherein the revelator has markings arranged successively where the frequency varies progressively from one marking to the next.

6. Method according to any one of the preceding claims wherein the revelator has markings in the form of juxtaposed dark or opaque bands separated by slits.

7. Method according to any one of the preceding claims wherein the base pattern is formed of a plurality of juxtaposed essentially identical markings.

8. Method according to any one of the preceding claims wherein the base pattern is provided as said printing file and the revelator pattern is provided on said transparency.

9. Method according to any one of the preceding claims wherein the base pattern and revelator patterns have a general outer contour essentially in the shape of an elongated linear band.

10. Printer calibration means for calibrating a printer including a moiré base pattern (2) and a complementary moiré revelator pattern (6), one provided as a printing file for printing by said printer and the other provided on a transparency, wherein either the revelator or the base pattern has a varying frequency and a corresponding scale (18a, 18b) allowing the calibration value to be determined by reading moiré patterns (12a, 12b, 12) formed when the base pattern and complementary revelator pattern are superposed.

11. Printer calibration means according to claim 1 or 2 wherein the base pattern has markings (4) arranged at a constant frequency.

12. Printer calibration means according to claim 10 or 11 wherein the revelator has markings (10) arranged in successive segments where the frequency varies progressively from one segment to the next.

13. Printer calibration means according to claim 10 or 11 wherein the revelator has markings arranged successively where the frequency varies progressively from one marking to the next.

14. Printer calibration means according to any one of claims 10 - 13 wherein the revelator has markings in the form of juxtaposed dark or opaque bands separated by slits (8).

15. Printer calibration means according to any one of claims 10-14 wherein the base pattern is formed of a plurality of juxtaposed essentially identical markings.

16. Printer calibration means according to any one of claims 10-15 wherein the base pattern is provided as said printing file and the revelator pattern is provided on said transparency.

17. Printer calibration means according to any one of claims 10-16 wherein the base pattern and revelator patterns have a general outer contour essentially in the shape of an elongated linear band.
